# EUROPEAN PATENT APPLICATION

(11) **EP 1 232 885 A2**
(43) Date of publication of application: **21.08.2002**
(21) Application number: 02250620.8
(22) Date of filing: 29.01.2002
(51) Int. Cl.: B60H 1/00, H02K 7/18, F25B 27/00

(54) **Generator for electrically powered refrigeration unit**

(30) Priority: 15.02.2001 US 784537
(71) Applicant: CARRIER CORPORATION, Syracuse New York 13221 (US)
(72) Inventor: Chopko, Robert A., Baldwinsville, New York 13027 (US); Barrett, Kenneth B., Jamesville, New York 13078 (US)
(74) Representative: Leckey, David Herbert

(57) **Abstract**

An all electric transport refrigeration system comprises a compressor 116 and drive motor 118. The motor 118 is driven by a single on-board engine 350 driven generator 300 that is of the axial air gap design type. The incorporation of an axial air gap type generator in the transport refrigeration system results in a system that meets space limitations while at the same time achieves the desired level of power output. This is due to the inherently slim profile of the axial air gap type generator which also promotes greater accessibility and ease of service to generator elements. Various arrangements of generator rotor and stator are disclosed.

## Description

### BACKGROUND OF THE INVENTION

This invention relates to an improved generator design for use on an all electric truck trailer refrigeration system that receives its compressor drive motor power and all other electrical power from a single on-board engine driven generator.

Transport refrigeration systems for a standardized truck trailer having on-board regulated power necessary to operate certain components such as system controls, motors and related devices are known in the art. Some of these refrigeration systems are also known to employ synchronous generators, such as that used in the GOLDEN EAGLE transport refrigeration unit manufactured by the CARRIER TRANSICOLD DIVISION of the CARRIER CORPORATION of Farmington, Connecticut.

Typically, the size of the equipment used in truck trailer refrigeration units is restricted to the limited space bounded by the tractor swing radius and the trailer front wall. In the prior art, such transport refrigeration applications have included an on-board, small power output generator or alternator and regulator apparatus which has been limited to providing power to a portion of the system power consuming apparatus, such as fan motors and system controls. On-board generators that are sufficiently large enough to simultaneously provide all the power needed by the transport refrigeration system, including the power to run compressor drive motor, have typically been too large for the available space and further, would also be too heavy and too costly to consider for use in conventional transport refrigeration systems.

Synchronous generators which are small enough to meet the size and weight requirements are typically not configured to meet the overall transport refrigeration system power requirements. Large synchronous generators of sufficient power capability to fully power a truck trailer transport refrigeration system have been too large, too heavy, and too costly to meet on-board size and weight requirements. Therefore, it would be desirable to design a transport refrigeration system with a synchronous generator power system that may provide the entire motor and control system power for the system while at the same time meeting required space limitations.

European Patent Application EP-A-1046524 entitled "Transport Refrigeration Unit With Synchronous Generator Power System" relates to a somewhat compact, lightweight, all electric transport refrigeration system with on-board electrical power generating capacity which is capable of providing sufficient power to simultaneously supply the electrical requirements of the refrigeration system compressor motor as well as all other motors and electrical devices. While such a refrigeration system does not exceed the spatial boundaries presently imposed by more conventional transport refrigeration systems, it would never the less be desirable to design a transport refrigeration system with a generator that is even more compact in design, while meeting on-board system power requirements. A more compact generator design would also result in a lighter weight and less costly transport refrigeration system.

Another challenge presented in the prior art electric transport refrigeration system occurs when the generator requires servicing. The rotor in such generator assemblies is typically buried within the heart of the unit thus hindering ease of repair. It would be desirable, then, to provide an electric transport refrigeration system with a generator assembly having greater serviceability.

### SUMMARY OF THE INVENTION

A transport refrigeration system is provided with a generator of an axial air gap type design which assumes a relatively very slim profile as compared to the prior art generator configurations. The system further includes a compressor and an electric compressor drive motor. The system includes a condenser heat exchanger unit and an evaporator heat exchanger unit operatively coupled, respectively, to a compressor discharge port and a compressor suction port. At least one fan assembly having an electric fan motor is configured to provide air flow over at least one of the heat exchange units. The generator assembly is preferably engine driven, preferably synchronous, and configured to a desired voltage at the desired frequency. The compressor drive motor and the at least on fan motor are configured to be directly coupled to the generator and to operate at a voltage and frequency produced thereby. However, non-synchronous generators may also benefit from this invention.

The unique geometry of the axial air gap type generator as employed in the present invention results in a novel transport refrigeration system of reduced size and weight. Further, the nature of the rotor and stator design and positioning within the axial air gap type generator allow for greater accessibility and ease of service of the generator elements.

These and other features of the present invention can be best understood from the following specification and drawings, the following of which is a brief description.

### BRIEF DESCRIPTION OF THE DRAWINGS

Figure 1 is a schematic diagram illustrating a trailer refrigeration system having a compressor with an integrated electric drive motor in accordance with an embodiment of the present invention.
Figure 2 is a side view of an engine driven axial air gap type synchronous generator in accordance with an embodiment of the present invention.
Figure 3 is a cross-sectional side view of an embodiment of the axial air gap type synchronous generator in accordance with the present invention.
Figure 4 is a cross-sectional side view of another embodiment of the axial air gap type synchronous generator in accordance with the present invention.
Figure 5 is a cross-sectional side view of yet another embodiment of the axial air gap type synchronous generator in accordance with the present invention.
Figure 6 shows another embodiment.

### DETAILED DESCRIPTION OF A PREFERRED EMBODIMENT

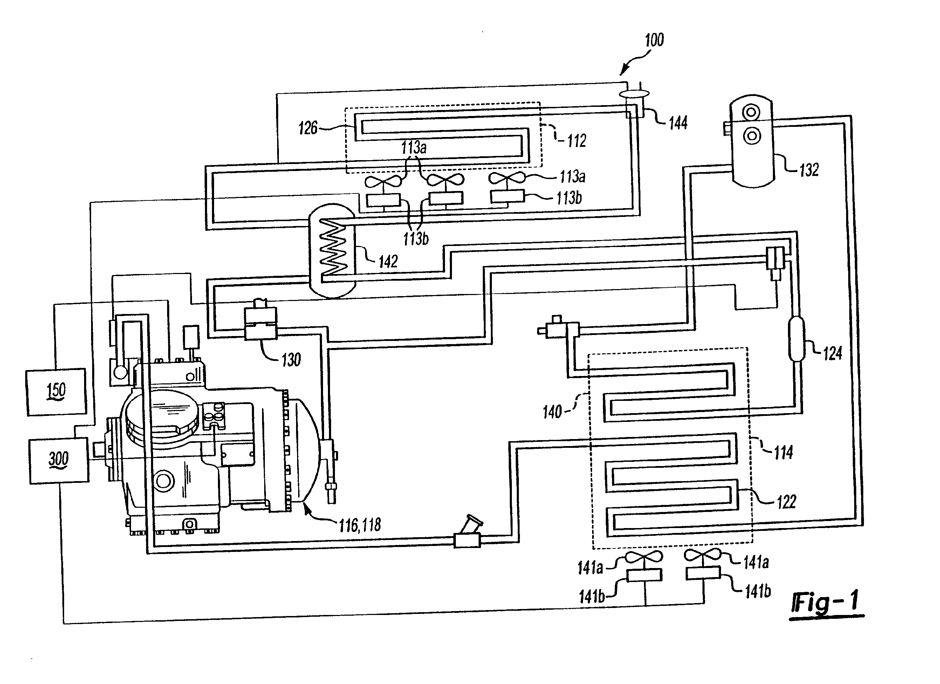

Referring to Figure 1, a trailer refrigeration system 100 is schematically illustrated with a compressor 116. The compressor 116 has the compressing mechanism, an electric compressor motor 118 and an interconnecting drive shaft all sealed within a common housing. A suitably designed generator 300 is provided that is capable of fully powering the internal electric motor 118 of the compressor as well as satisfying all other electrical requirements of the system.

Operation of the refrigeration system 100 can best be understood by starting at the compressor 116, where the refrigerant enters the compressor and is compressed to a higher temperature and pressure. Refrigerant then moves into the air-cooled condenser 114. Air flows across a group of condenser coil fins and tubes 122 and cools the gas to its saturation temperature. The air flow across the condenser is energized by one or more condenser fans 141a powered by condenser fan motors 141b. By removing latent heat, the gas condenses to a high pressure/high temperature liquid and flows to a receiver 132 that provides storage for excess liquid refrigerant during low temperature operation. From the receiver 132, the liquid refrigerant passes through a subcooler heat exchanger 140, through a filter dryer 124 that keeps refrigerant cool and dry, then to a heat exchanger 142 that increases the refrigerant subcooling, and finally to a thermostatic expansion valve 144.

As the liquid refrigerant passes through the orifice of the expansion valve 144, some of it vaporizes into a gas. Return air from the refrigerated space flows over the heat transfer surface of the evaporator 112. As refrigerant flows through the tubes 126 in the evaporator 112, the remaining liquid refrigerant absorbs heat from the return air, and in so doing, is vaporized. The air flow across the evaporator is energized by one or more evaporator fans 113a powered by evaporator fan motors 113b. The vapor then flows through a suction modulation valve 130 back to the compressor 116 and integral drive motor 118. A thermostatic expansion valve bulb or sensor is preferably located on the evaporator outlet tube. The bulb would be intended to control the thermostatic expansion valve, thereby controlling refrigerant super-heating at the evaporator outlet tubing. This is better described in the above-referenced prior applications, and forms no portion of this invention.

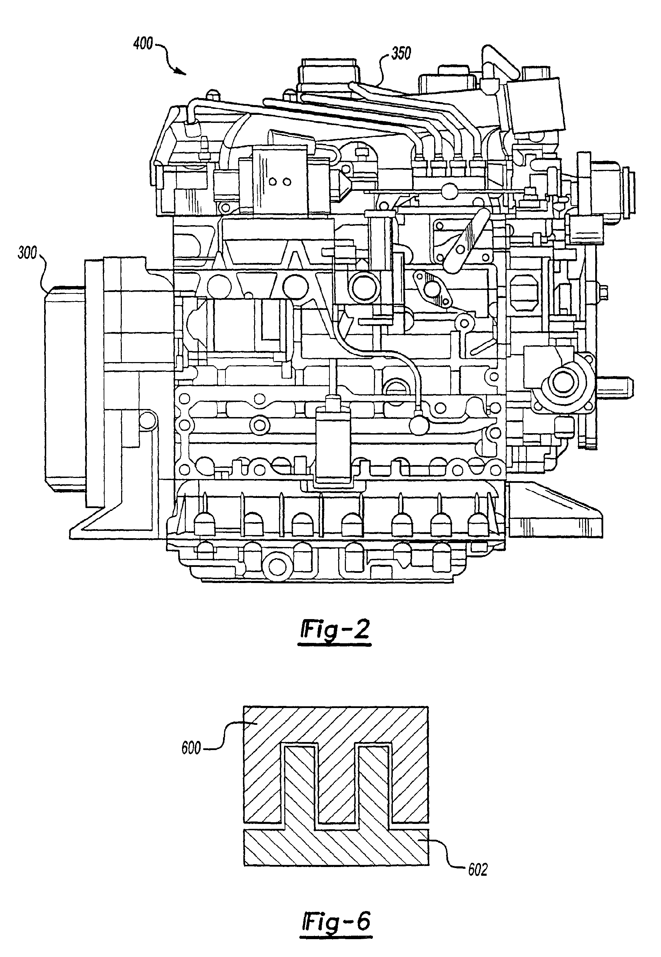

Figure 2 illustrates a side view of an integrally mounted engine driven synchronous generator unit 400 in accordance with one embodiment of the present invention. The structure of the integrally mounted engine driven synchronous generator unit 400 is unique in several details. It is a significant advantage that the inherently slim profile of the axial air gap type generator 300 allows the spatial requirements of the unitary engine driven synchronous generator unit 400 to be minimized. The axial air gap type generator 300 has an overall length, that when combined with the engine 350, easily fits within the relatively narrow frame of a conventional transport refrigeration unit. Further, the integrally mounted engine driven synchronous generator unit 400 with the incorporated axial air gap type generator 300 ultimately results in a desired reduction in weight of the transport refrigeration system.

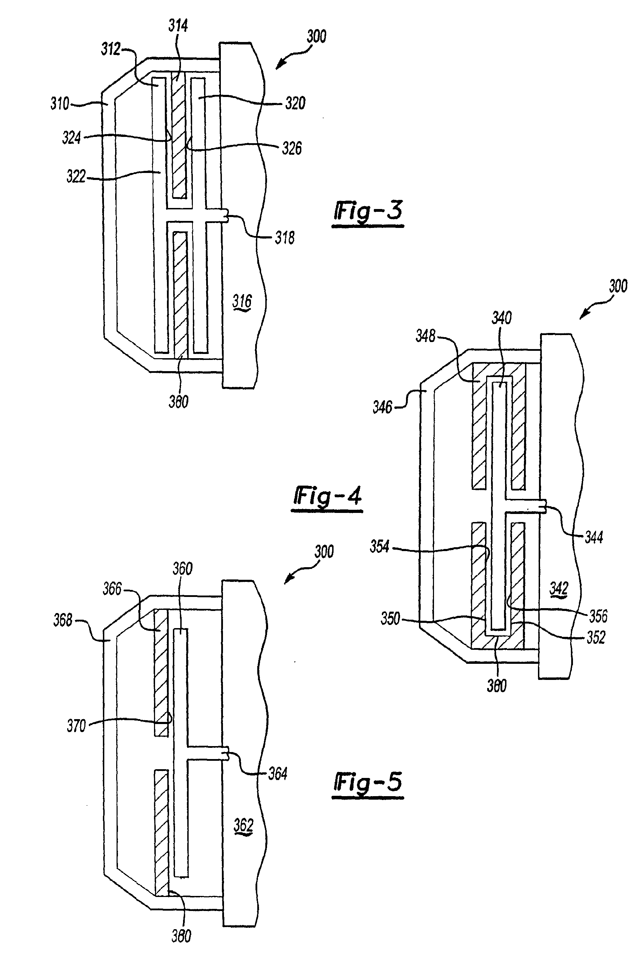

Figure 3 illustrates a cross-sectional side view of an embodiment of the axial air gap type generator 300. The generator includes a disc type stator assembly 314 that is fixedly attached to the housing 310 of generator 300. A multiple disc type rotor assembly 312 is rotatably affixed to the engine 316 and is rotatably driven by way of drive shaft 318. Rotor assembly 312 includes a pair of disc elements 320, 322, each having an opposing inner surface 324, 326 respectively, that magnetically communicates with stator assembly 314 that is sandwiched therebetween. Appropriate controls and electrical lines 380 provide power to the compressor from the stator.

Figure 4 illustrates an alternative rotor and stator configuration for axial air gap type generator 300. In this embodiment the generator 300 includes disc type rotor assembly 340 that is rotatably affixed to engine 342 by way of drive shaft 344. A multiple disc type stator assembly 348 is fixedly attached to the housing 346 of generator 300. Stator assembly 348 includes a pair of disc elements 350, 352 each having an opposing inner surface 354, 356 respectively, that magnetically communicates with rotor assembly 340 that is sandwiched therebetween.

Figure 5 illustrates yet another alternative configuration for the rotor and stator assemblies of axial air gap type generator 300. In this embodiment the generator 300 includes disc type rotor assembly 360 that is rotatably affixed to engine 362 by way of drive shaft 364. A disc type stator assembly 366 is fixedly attached to the housing 368 of generator 300. Stator assembly 366 includes surface 370, which magnetically communicates with rotor assembly 360. A worker in the generator art would be able to provide appropriate structure and controls for the generator designs of Figures 3-5.

One can also appreciate that this axial air gap type generator requires a much smaller axial envelope than the standard type generator.

It should be understood that while the rotor and stator configurations for generator 300 have been described in various embodiments above, that other suitable rotor and stator configurations may be used to achieve the desired level of output from the generator 300, including multiples of the foregoing examples. As an example, Figure 6 shows a power system having three components 600 and two intermediate components 602. The components 600 and 602 may each be either the stator or rotor. Figure 6 schematically illustrates that the concept of this invention can extend to axial air gap motors having plural sets of facing stator/rotor combinations. Further, although the present invention has been described as useful in transport refrigeration systems, those of skill in the art will readily understand and appreciate that the present invention has substantial use and provides many benefits in other types of refrigeration systems as well.

It has been shown that the unique geometry of the axial air gap type generator coupled with the appropriate compressive mechanism and electric compressor motor result in a transport refrigeration system that affords the desired size and weight requirements while meeting overall transport refrigeration system power requirements. It is to be further noted that the various alternative rotor positions within the axial air gap type generator allow for greater accessibility and ease of service of generator elements as compared to conventional generators where the rotor is buried within the heart of the unit.

A preferred embodiment of this invention has been disclosed. However, a worker of ordinary skill in this art would recognize that certain modifications would come within the scope of this invention. For that reason, the following claims should be studied to determine the true scope and content of this invention.

## Claims

1. A transport refrigeration system comprising:
a refrigeration system on a vehicle having a compressor (116) with at least one electric drive motor (118) disposed therein for running said compressor;
a condenser heat exchanger unit (114) operatively coupled to said compressor (116);
an evaporator heat exchanger unit (112) operatively coupled to said compressor (116);
at least one fan assembly (113a, 141a) having at least one fan motor (113b, 141b) configured to provide air flow over one of said heat exchanger units (112, 114); and
an integrally mounted unitary engine driven generator assembly (300) configured to directly power said at least one compressor drive motor (116), said generator being an axial air gap type synchronous generator (300) having a relatively slim profile and including a rotor assembly (312; 340; 360; 602) and a stator assembly (314; 348; 366; 600) positioned within a generator housing (310; 346; 368).

2. A transport refrigeration system as recited in Claim 1, wherein:
said rotor assembly and said stator assembly are configured such that said rotor assembly comprises a driven pair of discs (320, 322) and said stator assembly comprises a disc (314) that is sandwiched between said driven pair of discs (320, 322) and fixedly attached to said generator housing (310);
whereby each of said driven pair of discs (320, 322) has an inner opposing surface (324, 326) that magnetically communicates with said stator assembly.

3. A transport refrigeration system as recited in Claim 1, wherein:
said rotor assembly and said stator assembly are configured such that said stator assembly comprises a pair of discs (350, 352) fixedly attached to said generator housing (346) and said rotor assembly comprises a driven disc (340) that is sandwiched between said pair of discs (350, 352);
whereby each of said pair of discs (350, 352) has an inner opposing surfaces (354, 356) that magnetically communicates with said rotor assembly.

4. A transport refrigeration system as recited in Claim 1, wherein:
said rotor assembly and said stator assembly are configured such that said stator assembly comprises a stationary disc (366) that is fixedly attached to said generator housing (368) and said rotor assembly comprises a driven disc (360) that is positioned adjacent to said stationary disc (366);
whereby said stationary disc has a surface (370) that magnetically communicates with said driven disc (360).

5. A transport refrigeration system as recited in any preceding Claim, wherein there are a plurality of rotor discs and a plurality of stator discs positioned within said generator housing.

6. A transport refrigeration system as recited in any preceding Claim wherein said generator (300) is provided at one end of an engine (350).

7. A refrigeration system comprising:
a compressor (116) with at least one electric drive motor (118) disposed therein for running said compressor; and
a generator (300), said generator (300) being an axial air gap type generator.
